# EUROPEAN PATENT APPLICATION

(11) **EP 2 056 498 A2**
(43) Date of publication of application: **06.05.2009**
(21) Application number: 08166575.4
(22) Date of filing: 14.10.2008
(51) Int. Cl.: H04H 20/93, H04H 20/34

(54) **Data communication system and method for radio data service**

(30) Priority: 29.10.2007 KR 20070108782
(71) Applicant: Samsung Electronics Co., Ltd, Suwon-si, Gyeonggi-do (KR)
(72) Inventor: Kim, Jeong Hoon c/o Samsung Electronics Co., Ltd, Suwon-si Gyeonggi-do (KR); Park, Jung Hyo c/o Samsung Electronics Co., Ltd, Suwon-si Gyeonggi-do (KR); Kwak, Jong In c/o Samsung Electronics Co., Ltd, Suwon-si Gyeonggi-do (KR)
(74) Representative: Harrison Goddard Foote

(57) **Abstract**

A data communication system and method for an RDS is provided for improving RDS utilization by broadcasting, at a broadcasting party, a predetermined length of information in the form of a series of data segments and recovering, at a receiving part, the information by combining the data segments. A data communication method for a radio data service includes dividing, at a broadcast station, an information into at least one data segment; superimposing the at least one data segment on radio data service signals; broadcasting the radio data service signals in combination with radio broadcast signals; receiving, at a mobile terminal, the radio data service signals; extracting the at least one data segment from the radio data service signals; and recovering the information by combining the at least one data segment.

## Description

### CLAIMS OF PRIORITY

This application claims priority to an application entitled "DATA COMMUNICATION SYSTEM AND METHOD FOR RADIO DATA SERVICE" filed in the Korean Intellectual Property Office on October 29, 2007 and assigned Serial No. 2007-0108782, the contents of which are incorporated herein by reference.

### BACKGROUND OF THE INVENTION

### Field of the Invention

The present invention relates to a radio data service (RDS) and, in particular, to a data communication system and method for an RDS that is capable of broadcasting, at a broadcasting party, a predetermined length of information in the form of a series of data segments and recovering, at a receiving part, the information by combining the data segments.

### Description of the Related Art

Recent mobile terminals are evolving with the incorporation of various applications such as camera function, broadcast playback function, and multimedia file playback function. One of such applications is a radio function which allows the user to listen to radio channels. Typically, the radio function of a mobile terminal is implemented with a radio module which is activated according to a user input under the control of a terminal controller.

However, the conventional radio module-equipped mobile terminal provides only with a traditional radio receiver function that allows receiving audio signals over a tuned radio channel and outputting the audio signals in the form of an audible sound wave.

Thus, there is room to enrich the functionality of the radio-enabled mobile terminal by combining the radio function with other supplementary functions.

### SUMMARY OF THE INVENTION

In order to overcome the problems of the above prior art, the present invention provides a data communication system and method that enables a mobile terminal to provide various information associate with a currently playing radio broadcast stream.

In accordance with an exemplary embodiment of the present invention, a data transmission method for a radio data service includes dividing an information into at least one segment, superimposing the at least one data segment on radio data service signals, and broadcasting the radio data service signals in combination with radio broadcast signals.

In accordance with another exemplary embodiment of the present invention, a data reception method for a radio data service includes receiving at least one radio data service signal, extracting at least one data segment from the at least one radio data service signal, and recovering original information by combining the at least one data segment.

In accordance with another exemplary embodiment of the present invention, a data communication method for a radio data service includes dividing, at a broadcast station, an information into at least one data segment, superimposing the at least one data segment on radio data service signals, broadcasting the radio data service signals in combination with radio broadcast signals, receiving, at a mobile terminal, the radio data service signals, extracting the at least one data segment from the radio data service signals, and recovering the information by combining the at least one data segment.

In accordance with another exemplary embodiment of the present invention, a data communication system for a radio data service includes a broadcast station which divides an information into at least one data segment, superimposes the at least one data segment on radio data service signals, and broadcasts the radio data service signals in combination with radio broadcast signals; and a mobile terminal which receives the radio data service signals, extracts the at least one data segment from the radio data service signals, and recovers the information by combining the at least one data segment.

### BRIEF DESCRIPTION OF THE DRAWINGS

The above and other objects, features and advantages of the present invention will be more apparent from the following detailed description in conjunction with the accompanying drawings, in which:
FIG. 1 is a schematic diagram illustrating a RDS-based data communication system according to an exemplary embodiment of the present invention;
FIG. 2 is a block diagram illustrating a configuration of the mobile terminal of FIG. 1;
FIG. 3 is a diagram illustrating a data format of RDS data for used in a data communication system according to an exemplary embodiment invention;
FIG. 4 is a diagram illustrating a group coding scheme of the RDS data of FIG. 3;
FIG. 5 is a table listing types of groups of the RDS data of FIG. 3;
FIG. 6 is a diagram illustrating transmission of RDS data according to an exemplary embodiment of the present invention;
FIG. 7 is a diagram illustrating visual interfaces of display unit in radio reception mode of the mobile terminal according to an exemplary embodiment of the present invention; and
FIG. 8 is a message flow diagram illustrating a data communication method according to an exemplary embodiment of the present invention

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed description of well-known functions and structures incorporated herein may be omitted to avoid obscuring the subject matter of the present invention.

The terms and words used in the detailed description and claims are not limited to the bibliographical meanings, but, can be defined by the inventor to enable a clear and consistent understanding of the invention. Accordingly, it is apparent to those skilled in the art that the following descriptions of the embodiments of the present invention are provided for illustration only and not for the purpose of limiting the invention as defined by the appended claims and their equivalents.

In the following, the data communication system and method is described with reference to the specification of Radio data service (RDS) standard. RDS is a system for providing information along with Frequency Modulation (FM) broadcast signal. The standard FM stereo multiplex transmission signal consists of sum combination signals (L+R: 0-15kHz), a difference combination signals (L-R: 23-53kHz), and stereo pilot signal at 19kHz for purpose of synchronization. Other information can be modulated onto the main carrier using subcarriers at 57 kHz, 67 kHz, and 92 kHz.

RDS uses a subcarrier at 57 kHz for providing text information service such as traffic information broadcast and paging at the data rate of 1,187bps. The subcarriers at 67 kHz and 92 kHz can be used for Digital Audio Broadcasting (DAB).

In the following description, the mobile terminal can be any of various types of portable devices (equipped with a radio module) such as mobile phone, digital broadcast receiver, Personal Digital Assistant (PDA), Smartphone, Wideband Code Division Multiple Access (WCDMA) terminal, Global System For Mobile Communication / General Packet Radio System (GSM/GPRS) terminal and their equivalent devices. The present invention can be applied to any types of terminals equipped with a radio module that enables receiving audio and data signals simultaneously.

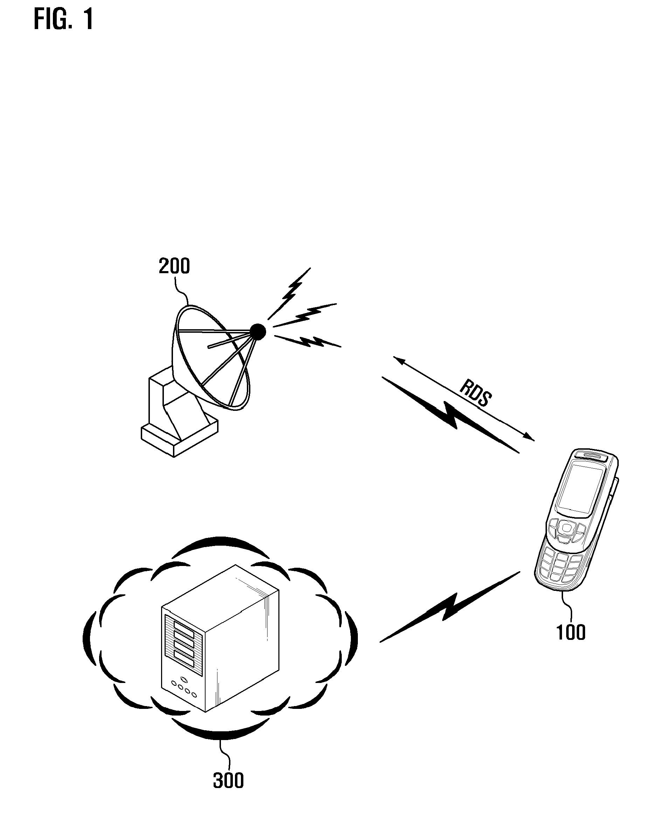

FIG. 1 is a schematic diagram illustrating a RDS-based data communication system according to an exemplary embodiment of the present invention. In following, the description is focused on the data communication, although a broadcast station broadcasts the audio and data signals simultaneously.

Referring to FIG. 1, the data communication system includes a broadcast station 200, a mobile terminal 100, and a contents server 300. The broadcast station 200 and contents server 300 can be implemented in the same structure but with distinct functions. That is, the broadcast station 200 may incorporates the contents server 300.

The broadcast station 200 broadcasts the RDS signals such that the mobile terminal 100 receives the RDS signals. The mobile terminal 110 extracts specific data from the RDS signal and recovers the original information from the extracted data, (in this embodiment, Uniform Resource Locator (URL)). The mobile terminal 110 establishes a communication channel with the contents server 300 with reference to the URL and downloads content information from the URL. The downloaded content information is stored temporarily or displayed on a display screen of the mobile terminal 110. In more detail, the mobile terminal 100 receives the RDS signals broadcasted by the broadcast station 200, recovers the original information by combining the segmented data extracted from the RDS signals, and downloads the content information from the contents server 300 indicated by the original information. In the data communication system according to this embodiment, the digital data is divided into a plurality of groups and then transmitted together with the audio signals simultaneously.

The broadcast station 200 adjusts some part of the data format of the RDS data to carry at least one data block such that the RDS data is transmitted together with the audio signals simultaneously. The RDS data having the same length can be transmitted in real time and periodically, e.g. every minute or every hour. The data format is described in more detail with the explanation of the mobile terminal 100 later.

The contents server 300 provides the content information corresponding to the RDS data. In order to provide the content information, the contents server 300 can establish a communication channel with the mobile terminal 100 when requested by the mobile terminal 100. The communication channel can be established on the basis of any of Wireless Access Network (WAN), Wireless Access Protocol (WAP), or Wireless Broadband (WiBro), and other wireless network standards. The content information provided by the contents server 300 includes metadata such as music album information, music file information, music video information, and artist information. Also, the content information may include advertisement, local, and fashion information associated with the radio broadcast.

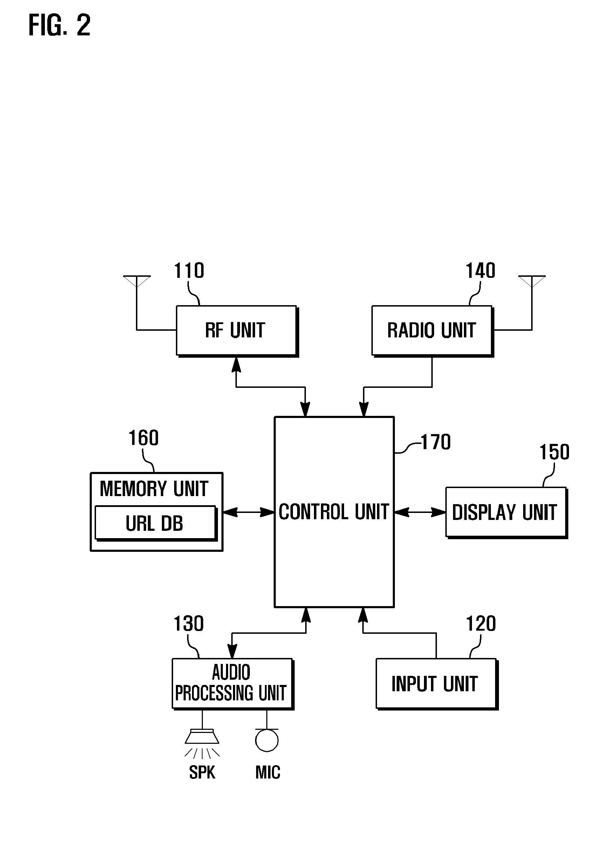

The mobile terminal 100 receives the RDS signals broadcasted by the broadcast station 200 and recovers the original RDS data from the data blocks carried on the RDS signals. The mobile terminal 100 stores the recovered RDS data temporarily or semi-permanently in a storage unit and presents the data on a display. Also, the mobile terminal 100 can access to the contents server 300 with reference to information contained in the original data and download the content information corresponding to the original data such that the downloaded is displayed on the display. The download of the content information can be triggered by a user command. That is, if a download command input is detected while the RDS data is displayed on the display screen, the mobile terminal 100 establishes a communication channel with the contents server 300 and downloads the corresponding content information from the contents server 300 such that the downloaded content information is displayed on the display screen. In the meantime, if a user command for activating the downloaded content information is input, displays a web page provided by the contents server 300 through the communication channel which is established already or re-established. The web page can be a contents sales page listing available content information and an item description page providing detailed information on each item. The page presentation can be implemented with a web browser. A structure of the mobile terminal 100 is described hereinafter with reference to FIG. 2.

FIG. 2 is a block diagram illustrating a configuration of the mobile terminal of FIG. 1.

Referring to FIG. 2, the mobile terminal 100 includes a Radio Frequency (RF) unit 110, an input unit 120, an audio processing unit 130, a radio unit 140, a display unit 150, a memory unit 160, and a control unit 170.

The RF unit 110 is responsible for establishing communication service channels under the control of the control unit 170. The RF unit 110 includes an RF transmitter for up-converting and amplifying transmission signal frequency and an RF receiver for low noise amplifying and down-converting received signal frequency.

Particularly in this embodiment, the RF unit 110 is configured to establish a communication channel with the contents server 300 with reference to the RDS information received through the radio unit 140. The RF unit 110 is also configured to receive the web page associated with the content information corresponding to the RDS information from the contents server 300. Here, the RF unit 110 can be configured such that, when the control unit 170 recovers the original RDS information from the data blocks carried on the RDS signals, it establishes the communication channel with the contents server 300 automatically. Also, the RF unit 110 can be configured so as to establish the communication channel in response to a user command input through the input unit 120.

The input unit 120 is provided with a plurality of alphanumeric keys for receiving alphanumeric information and function keys for executing various functions of the mobile terminal 100. The function keys can be implemented in the forms of navigation keys, side keys, and shortcut keys. The input unit 120 generates a key sequence input for setting or executing a specific function and transports the key sequence to the control unit 170.

Particularly in this embodiment, the key input unit 120 is configured to generate commands for activating the radio unit 140, recovering the RDS information, selecting a content information corresponding to the RDS information, searching for detailed information on the selected content information, and purchasing the content information, and outputs the commands to the control unit 170.

The audio processing unit 130 is provided with a speaker (SPK) for outputting the audio signal received through the RF unit 110 and radio broadcast signal received through the radio unit 140 in the form of an audible sound wave and a microphone (MIC) for converting input sound including user voice into the audio signal to be transmitted through the RF unit 110. The audio processing unit 130 also processes the audio signal contained in the content information, e.g. audio file, to be output in the form of audible sound wave when the content information is replayed in response to a playback command.

The radio unit 140 is a module for receiving the radio signals broadcasted by the broadcast station 200. The radio unit 140 is configured to receive the radio signals in the format of the radio broadcast standard adopted by the broadcast station 200. When the broadcast station 200 is a FM broadcast station, the radio module 140 is an FM radio receiver module. Also, when the broadcast station 200 is an Amplitude Modulation (AM) broadcast station, the radio unit 140 is an AM radio receiver module. Of course, the radio unit 140 can be configured to receive both the FM and AF radio signals. The radio unit 140 receives the RDS signals together with the radio signals. The RDS signals can be delivered to the memo unit 160 and display unit 150 via the control unit 170. In a case that the mobile terminal 100 has channel setting information configured by the user, the radio unit 140 can be automatically tuned to a specific channel under the control of the control unit 170. For this purpose, the control unit 170 scans frequencies and creates a channel list in the form of a database (BD). The channel list can be displayed on the display under the control of the control unit 170.

The display unit 150 provides the user with a visual interface for presenting various information such as radio module activation, standby mode screen, menu screen, and call processing status. The display unit 150 can be implemented with a Liquid Crystal Display (LCD). In this case, the display unit 150 is provided with an LCD controller, video memory for buffering video data, and LCD devices. When the LCD supports the touchscreen functionality, the display unit 150 can works as a part of the input unit 120.

Particularly in this embodiment, the display unit 150 is configured to display the RDS information received through the radio unit 140. The display unit 150 also can display the content information corresponding to the RDS information, the content information being downloaded from the contents server 300. The display unit 150 also displays the web page provided by the contents server 330 in response to a purchase command or an item information request command. The visual interface of the display unit 150 is described in more detail later.

The memory unit 160 stores application programs including a web browser application and radio broadcast playback application. When the mobile terminal 100 operates in a radio reception mode, the memory unit 160 provides a buffer for buffering the received radio signals. The memory unit 160 may include a program region and a data region.

The program region stores the Operating System (OS) for managing the hardware and software of the mobile terminal 100 and the application programs for executing various functions such as message service and audio and video output functions. Particularly in this embodiment, the program region stores the radio broadcast reception and playback programs and web browser program. The program region loads the application programs in response to the user request under the control of the control unit 170.

The data region stores application data generated when the application programs are running and buffers the radio broadcast signals and RDS signals. The data region also stores user data associated with various optional functions provided by the mobile terminal 100, such as phonebook, audio data, downloaded contents, and metadata of the contents. The data region also stores the RDS data blocks extracted from the received RDS signals and RDS information acquired by combining the RDS data blocks. The RDS information is transferred to the display unit 150 in response to a user command under the control of the control unit 170.

The control unit 170 controls the internal components of the mobile terminal 100 and signaling between the components. The control unit 170 activates the radio broadcast reception application in response to the user command and controls such that the radio unit 140 is tuned to a specific radio channel. The control unit 170 also controls such that the radio broadcast signals are output through the audio processing unit 130. The control unit 170 extracts the RDS data blocks from the RDS signals and combines the RDS data blocks to recover the original RDS information. The control unit 170 stores the RDS information, e.g. URL information within the memory unit 160. The URL information can be stored in the form of a database, e.g. URL DB.

After recovering the RDS information, the control unit 170 controls such that the RDS information is displayed on the display unit 150 and/or the RF unit 110 establishes a communication channel with the contents server 300 to download the content information corresponding to the RDS information. In the case that the RDS information is a URL, the control unit 170 controls the RF unit 110 to establish a communication channel with the contents server 300 with reference to the URL such that the mobile terminal 100 can download the content information, e.g. album information provided at the URL. The downloaded content information is displayed on the display unit 150. That is, the control unit 170 controls such that the downloaded content information is displayed while the radio broadcast signals processed by the audio processing unit 150 are output in the form of audible sound wave.

When a user command is input through the input unit 120, the control unit 170 analyzes a kind of the user command, e.g. a web page access command for acquiring the album information of an audio file or for purchasing the audio file, the control unit 170 controls to establish a communication channel with the contents server 300. At this time, the control unit 170 activates the web browser application to access the web page provided by the contents server 300.

As described in this embodiment, the mobile terminal 100 is configured to receive the radio broadcast signals and RDS information simultaneously and display the RDS information or acquire more detailed information by accessing web pages indicated by the RDS information.

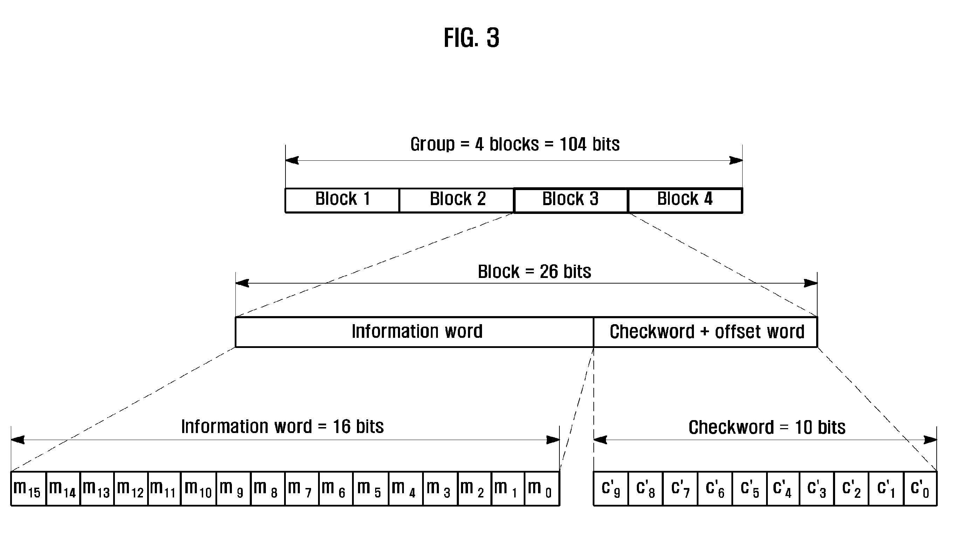

A data format for transmitting the RDS data is described hereinafter with reference to FIGs. 3 to 5.

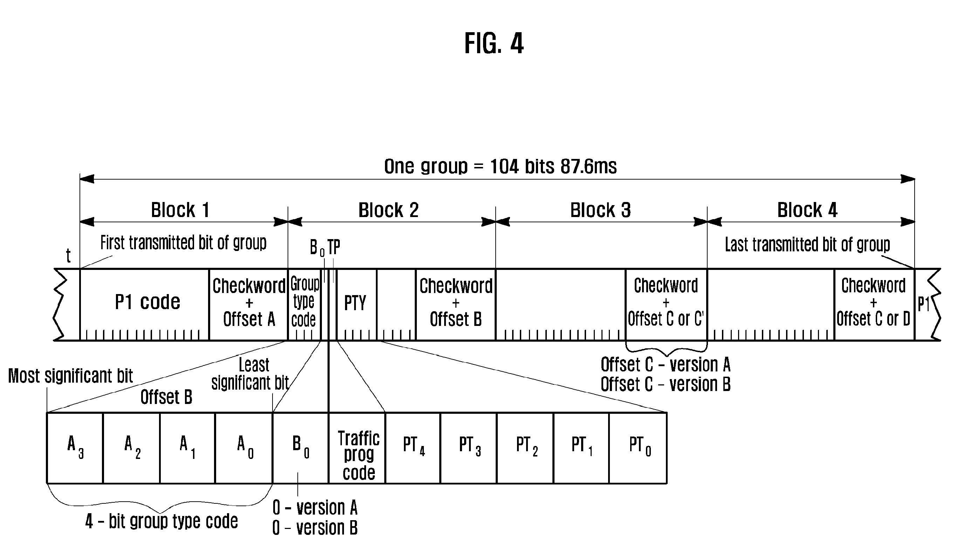

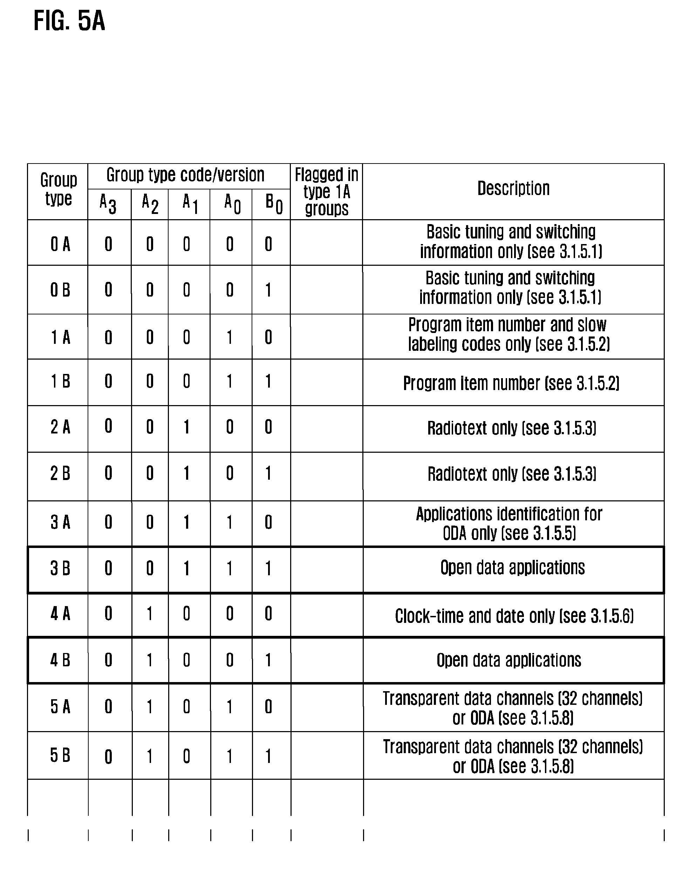

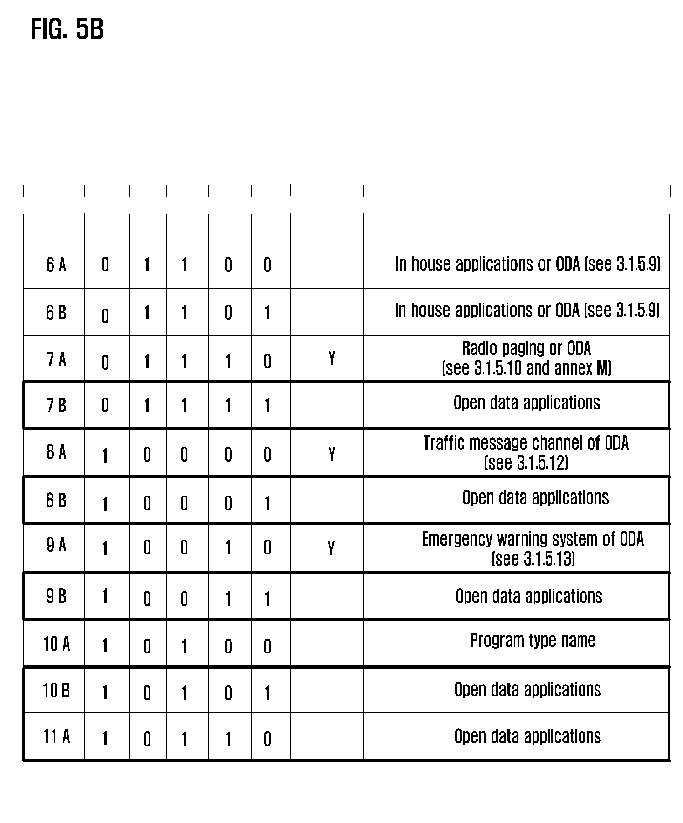

FIG. 3 is a diagram illustrating a data format of RDS data for used in a data communication system according to an exemplary embodiment invention, FIG. 4 is a diagram illustrating a group coding scheme of the RDS data of FIG. 3, and FIG. 5 is a table listing types of groups of the RDS data of FIG. 3.

Referring to FIG. 3, the information is coded into RDS groups, each consisting of four data blocks (block 1, block 2, block 3 and block 4) or 104 bits. Each block contains 26 bits: 16 bits (m0, m1, m2, ..., m14, m15) in the information word and 10 bits (c0, c1, ..., c8, c9) in the check word and offset word. In short, the RDS data is transmitted in the form of synchronous stream of four data blocks each containing 16 bits of information values and 10 bits of check information.

Referring to FIG. 4, the first block consists of a PI code and a check bits. The PI code means the Program Identification code containing information related to the broadcast station such as country, coverage area, and name of the broadcast station. The group type code is 4 bits

The second block consists of a group type code, version code, traffic program code, PTY code, and check bits. The group type code contains four bits and indicates what the RDS group data blocks represent. The version code indicates whether the RDS group is type A or B. The traffic program code provides an indicator of traffic content currently being broadcasted. The PTY code indicates the type of program such as news, sports, and music programs.

The contents of the third and fourth blocks various according to the group type code and version code of the second block. For example, when the group type code is set to 0, the third block contains two replacement frequency values in its information region, and the fourth block contains a Program Service Name Segment in its information region. Meanwhile, when the group type code is set to 1, the third block contains the PI code assigned by the broadcast station in its information region, and the fourth block contains the Program Service Name Segment in its information region. The last bit of the check region of the fourth block may be the last transmission bit of the group.

Referring to FIG. 5, the group types indicated by the group type codes 3B, 4B, 7B, 8B, 9B, 10B, and 11A are described as Open Data Applications in the description field. These group types can be designated by the user or operator. In this embodiment, at least one of group types is selected for carrying the RDS data in the third and four blocks. The information is segmented into RDS data and then transmitted over the RDS signals such that the mobile terminal receives the RDS signals recovers the information by combining the RDS data extracted from the RDS signals.

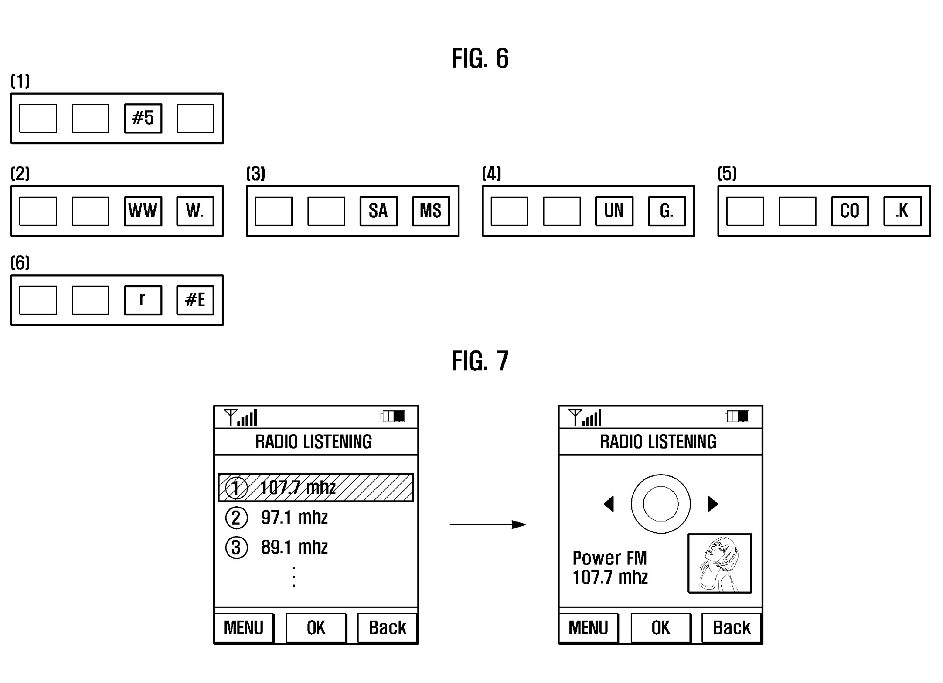

FIG. 6 is a diagram illustrating transmission of RDS data according to an exemplary embodiment of the present invention. The information is coded into RDS group, each consisting of four data blocks and corresponds to an RDS signal. In this embodiment, it is assumed that the information divided into data segments are transmitted using six RDS groups. Also, the data segments are carried on the third and fourth blocks of the RDS groups. The first and second data blocks may carry the information including the group type code "Open Data Applications" as shown in FIG. 5.

Referring to FIG. 6, the data segments consist of #5 inserted into the third and fourth blocks of the first group, www. inserted into the third and fourth blocks of the second group, SAMS inserted into the third and fourth blocks of the third group, UNG. inserted into the third and fourth blocks of the fourth group, CO.K inserted into the third and fourth blocks of the fifth group, and r#E inserted into the third and fourth blocks of the sixth group. The information to be recovered by combining the data segments is delimited by "#5". Here, #5 and #E are act as a role of grammar for defining the RDS signals carrying the data segments. That is, "#5" indicates that 5 groups are following the current group. Also, "#E" indicates the end of the information. Upon receipt of the data delimited by "#5" and "#E", the control unit 170 of the mobile terminal 100 removes the "#5" and "#E" and recognizes the data between "#5" and "#E" as useful data. Although at most two characters are placed in a signal block in FIG. 6, the number of characters per block can be changed depending on the language coding system, i.e. the distinct bit mapping characteristics of languages (e.g. English and Korean). In this embodiment, it is assumed that a character corresponds to 1 byte for placing two characters in the 16-bit information region.

As described above, the mobile terminal 100 according to this embodiment receives the RDS signals carrying the data segments broadcasted by the broadcast station 200 and recovers the original RDS information by combining the data segments. Once the original RDS information is acquired, the control unit 170 of the mobile terminal 100 accesses to the contents server 300 with reference to the original RDS information, downloads the content information indicated by the RDS information, and displays the downloaded content information on the display unit 150. Now, the visual interface of the display unit 150 for displaying the content information while the mobile terminal 100 operates in the radio reception mode is described.

FIG. 7 is a diagram illustrating visual interfaces of display unit in radio reception mode of the mobile terminal according to an exemplary embodiment of the present invention.

Referring to FIG. 7, when the radio unit 140 is activated, the display unit 150 displays a frequency channel list on the display unit 150. If a specific frequency channel is selected from the frequency channel list, the control unit 170 displays a channel-specific screen associated with the selected frequency channel on the display unit 150. The channel-specific screen can be implemented as a still image or a motion image. While a specific radio program is playing, the control unit 170 controls such that the tile of the radio program (e.g. "Power FM") and the channel frequency (e.g. "107.7MHz) are displayed on the display unit 150. The display unit 150 also can display the RDS information recovered by combining the data segments extracted from the RDS signals. The display unit 150 also can display the content information downloaded from the contents server 300, e.g. album cover of the currently playing song. The content information can be provided with a hyper link such that the user can open a webpage linked to the content information using the web browser application program. The webpage can be any of a content detail page, a purchase guide page, and an additional information page.

As described above, the display unit 150 can display the RDS information generated by the control unit 170 while the user listens to the radio or the content information downloaded from the contents server 300 with reference to the RDS information.

Until now, the structures and functions of the data communication system according to the embodiments of the present invention are described. A data communication method of the above described data communication system is described hereinafter.

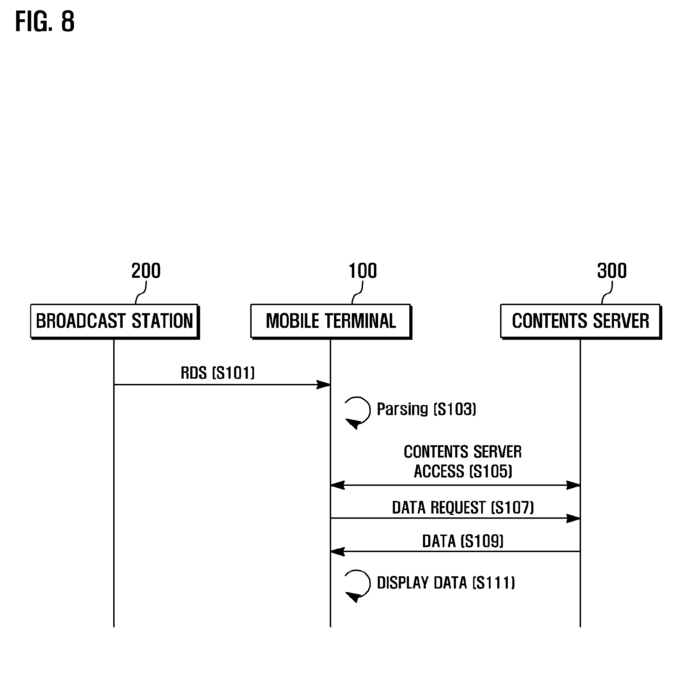

FIG. 8 is a message flow diagram illustrating a data communication method according to an exemplary embodiment of the present invention. In this embodiment, the broadcast station 200 encodes the information to be transmitted into RDS groups in the RDS data format. The RDS information can be a URL of the contents server 300 that provides the information on a content information (e.g. currently playing radio stream), such as album cover image, purchase information, and other detailed information. Also, the RDS information can be a predetermined length of text.

Referring to FIG. 8, the mobile terminal 100 receives RDS signals broadcasted by the the broadcast station 200 (S101) and performs parsing on the RDS signals to extract the data segments from the RDS signals (S103).

In more detail, the broadcast station 200 encodes the RDS information into groups each consisted of four data blocks. The second block of each group contains a group type code indicating "Open Data Applications", and the third and fourth blocks of each group contain payloads, i.e. the data segments, in sequential order. The broadcast station 200 superimposes the data segments on the RDS signals. Preferably, the broadcast station 200 inserts an indicator for informing the mobile terminal 100 of the start of the RDS information and a number of groups carrying the RDS information. Also, the broadcast station 200 inserts an indicator for informing the end of the RDS information at the last data group.

Upon receipt of the RDS signals, the mobile terminal 100 recovers the RDS information from the RDS signals and accesses to the contents server 300 with reference to the RDS information (S105) and requests the contents server 300 for a content information indicated by the RDS information (S107). In response to the request, the contents server 300 sends the content information to the mobile terminal 100 (S109).

At step S105, the mobile terminal 100 activates the RF unit 110 to establish a communication channel with the contents server 300. The communication channel can be established on the basis of a wireless network technology such as Wireless Access Network (WAN), Wireless Access Protocol (WAP), or Wireless Broadband (WiBro). It is preferred that the wireless communication channel between the mobile terminal 100 and contents server 300 is established through background processing. The mobile terminal 100 can be configures such that a data request message is transmitted to the contents server 300 automatically. For this purpose, it is preferred that the RDS information contains address information of the corresponding data, i.e. content information. The mobile terminal also can be configured such that the content information is downloaded from the contents server 300 without confirmation process.

Once the content information is received from the contents server 300, the mobile terminal displays the content information on the display unit 150 (S111). At this time, the mobile terminal 100 displays the content information corresponding to the RDS information at a part of the display unit 150 while playing the radio broadcast stream received through the radio unit 140.

As described above, in the data communication system, a broadcast station transmit RDS information, in the form of segmented data, over the RDS signals broadcasted together with radio broadcast signals such that a receiving party extracts the segmented data from the RDS signals and recovers the RDS information by combining the segmented data. Also, the data communication system of the present invention enables the mobile terminal to access the contents server with reference to the RDS information and downloads and displays the content information corresponding to the RDS information as an automatic process.

Although exemplary embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

As described above, the RDS-based data communication system and method of the present invention enables transmitting a predetermined length of data such as URL and text information through a radio broadcasting network.

## Claims

1. A data transmission method for a radio data service, comprising:
dividing an information into at least one segment;
superimposing the at least one data segment on radio data service signals; and
broadcasting the radio data service signals in combination with radio broadcast signals.

2. The data transmission method of claim 1, wherein superimposing the at least one segment on the radio data service signals comprises at least one of:
defining a group type of at least one data group carrying the at least one segment, each group including four blocks of which second block indicates the group type;
inserting the at least one segment into information fields of third and fourth blocks of the at least one data group;
inserting an information start indicator into a first data group of the at least one data group for indicating a start of the information and a number of data groups following the first data group; and
inserting an information end indicator into a last data group of the at least one data group for indicating an end of the information.

3. A data reception method for a radio data service, comprising:
receiving at least one radio data service signal;
extracting at least one data segment from the at least one radio data service signal; and
recovering original information by combining the at least one data segment.

4. The data reception method of claim 3, further comprising:
displaying the original information on a display;
downloading a content information indicated by the original information from a contents server; and
displaying the content information on the display.

5. The data reception method of claim 3, wherein extracting at least one data segment comprises:
checking a group type of a number of data groups carrying the original information, each data group including four blocks;
determining whether the group type is classified as Open Data Applications;
reading, when the group type is classified as Open Data Applications, the at least one data segment out of the data groups.

6. A data communication method for a radio data service, comprising:
dividing, at a broadcast station, an information into at least one data segment;
superimposing the at least one data segment on radio data service signals;
broadcasting the radio data service signals in combination with radio broadcast signals;
receiving, at a mobile terminal, the radio data service signals;
extracting the at least one data segment from the radio data service signals; and
recovering the information by combining the at least one data segment.

7. The data communication method of claim 6, wherein superimposing the at least one segment on the radio data service signals comprises at least one of:
defining a group type of at least one data group carrying the at least one segment, each group including four blocks of which second block indicates the group type;
inserting the at least one segment into information fields of third and fourth blocks of the at least one data group;
inserting an information start indicator into a first data group of the at least one data group for indicating a start of the information and a number of data groups following the first data group; and
inserting a information end indicator into a last data group of the at least one data group for indicating an end of the information.

8. The data communication method of claim 6, further comprising:
displaying the information on a display of the mobile terminal;
downloading a content information indicated by the information from a contents server; and
displaying the content information on the display.

9. The data communication method of claim 6, wherein extracting the at least one data segment comprises:
checking the group type of the at least one data group;
determining whether the group type is classified as Open Data Applications; and
reading, when the group type is classified as Open Data Applications, the at least one data segment out of the data groups.

10. A data communication system for a radio data service, comprising:
a broadcast station which divides an information into at least one data segment, superimposes the at least one data segment on radio data service signals, and broadcasts the radio data service signals in combination with radio broadcast signals; and
a mobile terminal which receives the radio data service signals, extracts the at least one data segment from the radio data service signals, and recovers the information by combining the at least one data segment.

11. The data communication system of claim 10, wherein the broadcast station performs at least one of:
defining a group type of at least one data group carrying the at least one segment, each group including four blocks of which second block indicates the group type;
inserting the at least one segment into information fields of third and fourth blocks of the at least one data group;
inserting an information start indicator into a first data group of the at least one data group for indicating a start of the information and a number of data groups following the first data group; and
inserting an information end indicator into a last data group of the at least one data group for indicating an end of the information.

12. The data communication system of claim 10, wherein the mobile terminal displays the information on a display.

13. The data communication system of claim 10, further comprising a contents server for providing content information indicated by the information.

14. The data communication system of claim 13, wherein the mobile terminal downloads the content information from the contents server and displays the content information on the display.

15. The data communication system of claim 10, wherein the mobile terminal checks the group type of the at least one data group, determines whether the group type is classified as Open Data Applications, and extracts, when the group type is classified as Open Data Applications, the at least one data segment from the third and fourth blocks of the at least one data group.
